# EUROPEAN PATENT SPECIFICATION

(11) **EP 4 068 508 B1**
(45) Date of publication and mention of the grant of the patent: **04.06.2025**
(21) Application number: 21166574.0
(22) Date of filing: 01.04.2021
(51) Int. Cl.: H01Q 1/24, H01Q 1/52, H04M 1/02, H01Q 17/00, H04B 1/3827, H04M 1/04, H04B 1/3888

(54) **ELECTROMAGNETIC SHIELDING DEVICE**
VORRICHTUNG ZUR ELEKTROMAGNETISCHEN ABSCHIRMUNG
DISPOSITIF DE BLINDAGE ÉLECTROMAGNÉTIQUE

(43) Date of publication of application: 05.10.2022
(73) Proprietor: Stassinopoulos, Michael, 151 25 Maroussi, Attica (GR)
(72) Inventor: Stassinopoulos, Michael, 151 25 Maroussi, Attica (GR)
(74) Representative: TBK

(56) References cited:
- WO-A2-2007/063484
- DE-U1- 202020 102 130
- DE-U1- 29 923 548
- JP-A- 2005 344 396
- US-A1- 2012 194 125
- US-A1- 2013 303 242
- US-A1- 2016 197 632
- US-A1- 2016 234 356

## Description

### Field

The present invention relates to an electromagnetic shielding device. Particularly, the invention relates to an electromagnetic shielding device for enclosing an electromagnetically transmitting and/or receiving device such that spreading of electromagnetic radiation can be controlled.

### Background

Electromagnetic radiation, in particular radio waves are largely used for wireless communication by electromagnetically transmitting and/or receiving devices, such as laptops, tablets, and mobile phones.

Besides all advantages of using wireless communication, an increasing number of studies reveal that electromagnetic radiation may have significant effects on living organisms. In many studies, electromagnetic radiation is considered as possibly acting carcinogenic on the human body, or being capable of mutating genetic material.

In particular, mobile phones are often used multiple times daily and are often placed in the immediate proximity to human bodies. Thereby, the human body is largely exposed to electromagnetic radiation transmitted and/or received from the mobile phone. Electromagnetic shielding devices for electromagnetic transmitting and/or receiving devices are known from DE 20 2020 102130 U1, US 2012/194125 A1, DE 299 23 548 U1, JP 2005 344396 A, WO 2007/063484 A2 , and US 2016/234356 A1.

An object of the present invention is to provide an electromagnetic shielding device which reduces exposure of a user to electromagnetic radiation transmitted and/or received from the mobile phone, while maintaining operability of the mobile phone.

### Summary

The above object is solved by an electromagnetic shielding device according to claim 1.

Electromagnetic radiation particularly refers to mobile radio communication. Mobile radio communication may be particularly transmitted by an electromagnetic transmitting and/or receiving device, such as a mobile phone, a mobile phone base station, a digital wireless systems, a wireless internet gateway, a laptop, or similar devices. Electromagnetic radiation may particularly refer to signals emitted in the frequency range of 600 MHz to 5.5 GHz. More specifically, electromagnetic radiation may refer to signals emitted in the frequency range of 900 MHz to 1800 MHz (GSM), 800 MHz to 1800 MHz (LTE), 600 MHz to 6 GHz (5G), or 2.4 GHz to 5 GHz (Wifi), up to 10 GHz.

According to the invention, the electromagnetic shielding device is capable of shielding electromagnetic radiation transmitted from or to the electromagnetically transmitting and/or receiving device, which is accommodated in the shielding case. The shielding case is configured to form a Faraday cage around the accommodating space. Accordingly, a Faraday cage can be formed around the electromagnetically transmitting and/or receiving device accommodated in the accommodating space.

The internal antenna allows transmitting and/or receiving of electromagnetic radiation from the electromagnetic transmitting and/or receiving device. The internal antenna is placed in the accommodating space inside the shielding case. In other words, a configuration is provided, in which there is no component between the electromagnetically transmitting and/or receiving device and the internal antenna that is shielding electromagnetic radiation, when the electromagnetically transmitting and/or receiving device is accommodated in the accommodating space. The internal antenna can be constituted by a cable or an electrically insulated printed circuit board.

The antenna cable is located inside the accommodating space and connected with one end to the internal antenna. The antenna cable is guided to a portion of the shielding case so as to be connectable to an external antenna arranged outside the shielding case. The portion of the shielding case may be a wall surface of the shielding case or a hole in the shielding case. Accordingly, the antenna cable is suitable for connecting the internal antenna placed inside the shielding case to the external antenna arranged outside the shielding case. On the other hand, the external antenna can be moved to a suitable position away from the shielding case such that a power of the electromagnetic radiation transmitted from the electromagnetic transmitting and/or receiving device in a region around the shielding case is reduced. At the same time, the electromagnetic transmitting and/or receiving device accommodated in the accommodating space remains fully functional by transmitting and/or receiving electromagnetic radiation to the outside of the shielding case via the internal antenna and the antenna cable. The antenna cable may be a coaxial cable or any other type of conventional cables.

According to the invention, the shielding case includes a base having an accommodating area for accommodating the electromagnetic transmitting and/or receiving device thereon and a cover for covering the electromagnetic transmitting and/or receiving device. The cover is placeable on the base such that the cover and the base surround the accommodating space in a closed state.

According to such a configuration, the cover can be placed on the base such that the cover and the base entirely surround the accommodating space in a closed state. The closed state refers to an arrangement, in which the cover is placed on the base so as to seal the accommodating space from an outside of the shielding case. The base can be placed on a flat surface. The accommodating area of the base is a surface that is suitable for holding the electromagnetic transmitting and/or receiving device thereon. The cover can be placed on the base such that the cover is in contact with the base along an entire circumference of the accommodating area. Accordingly, the shielding effect of the Faraday cage is improved and electromagnetic radiation can be shielded more effectively.

In a further preferred embodiment, the internal antenna overlaps with the accommodating area when viewed in a plan view of the accommodating area.

According to such a configuration, the internal antenna may be placed in the closest possible distance from the electromagnetic transmitting and/or receiving device for an optimum communication between the internal antenna and the electromagnetic transmitting and/or receiving device.

In a further preferred embodiment, the internal antenna overlaps with a center of the accommodating area when viewed in a plan view of the accommodating area.

According to such a configuration, the internal antenna can be placed at a closest possible distance from the center of the electromagnetic transmitting and/or receiving device. Specifically, the internal antenna may be placed within a range of 2 to 5 cm from the center of the accommodating area. Thereby, an optimum communication between the internal antenna and the electromagnetic transmitting and/or receiving device is ensured.

In a further preferred embodiment, the internal antenna overlaps within a perimeter of the electromagnetic transmitting and/or receiving device.

According to such a configuration, the internal antenna is positioned in a further optimum position with regard to the electromagnetic transmitting and/or receiving device.

In a further preferred embodiment, the accommodating area is spaced apart from an outer circumference of the base by at least 20 millimeters when viewed in a plan view of the accommodating area.

According to such a configuration, a supplemental space of at least 20 millimeters is provided on the outer circumference of the base such that a closure system may be provided on the shielding case. By additionally providing the closure system, the cover can be detachably attached to the base so as to obtain a secure positioning between the cover and the base. The closure system may comprise stitches close to a fold of the fabric, and an additional weight incorporated along an outer circumference of the cover. Specifically, the accommodating area may be spaced apart from the outer circumference of the base by 20 to 80 millimeters when viewed in a plan view of the accommodating area.

In a further preferred embodiment, the internal antenna is attached to the base or the cover of the shielding case.

According to such a configuration, the internal antenna is securely held in its position. Thereby, a displacement of the internal antenna is prevented, when the cover or the entire electromagnetic shielding device is moved.

According to the invention, the electromagnetic shielding device further comprises an inner layer permeable for electromagnetic radiation transmitted from or to the electromagnetically transmitting and/or receiving device. The inner layer is attached to an inner surface of the base facing the accommodating space in the closed state, and the internal antenna is placed between the inner layer and the base. Alternatively, the inner layer is attached to an inner surface of the cover facing the accommodating space in the closed state, and the internal antenna is placed between the inner layer and the cover.

According to such a configuration, the inner layer provides mechanical protection of the electromagnetic transmitting and/or receiving device from the internal antenna. Thereby, damage such as scratches on the electromagnetic transmitting and/or receiving device as a result of accommodating the electromagnetic transmitting and/or receiving device in the accommodating space are effectively prevented.

According to the invention, the inner layer comprises at least one antenna pocket opened to the accommodating space for receiving the internal antenna.

According to such a configuration, the antenna pocket holds the internal antenna in place with respect to the shielding case. Thereby, an undesired displacement of the internal antenna is prevented. In addition, the antenna pocket is opened to the accommodating space such that the internal antenna can be selectively placed in the antenna pocket by a user. Particularly, two or three antenna pockets may be provided that are displaced from each other along the inner layer. In other words, two or more antenna pockets may be located at different positions along the inner layer. Accordingly, a user may selectively place the internal antenna in one of the two or more antenna pockets for an optimum transmission of electromagnetic radiation between the electromagnetic transmitting and/or receiving device and the internal antenna. This allows the user to adapt a position of the internal antenna according to a size of the electromagnetic transmitting and/or receiving device.

In a further preferred embodiment, the at least one antenna pocket faces the accommodating area.

According to such a configuration, a further reduced distance between the internal antenna placed in the antenna pocket and the electromagnetic transmitting and/or receiving device is obtained. Thereby, a further optimum communication between the internal antenna and the electromagnetic transmitting and/or receiving device is achieved.

In a further preferred embodiment, each of the base and the cover is made of one or more layers of fabric and each one of the layers of fabric includes metal fibers or carbon fibers for shielding electromagnetic radiation transmitted from or to the electromagnetic transmitting and/or receiving device.

According to such a configuration, the Faraday cage is formed by fabric which includes metal fibers or carbon fibers. The metal fibers may be fibers entirely made of a metal material or any fiber coated with a metal material. Preferably, the base and the cover may be integrally made from one piece of a multi-layer fabric, which is folded along a centerline so as to form an envelope. In case at the at least one antenna pocket is provided, the antenna pocket may further be sewn-in on the base or cover.

In a further preferred embodiment, the metal fibers include silver, copper, aluminium, or steel for shielding of electromagnetic radiation.

According to such a configuration, a particularly effective shielding of electromagnetic radiation can be provided.

In a further preferred embodiment, the electromagnetic shielding device further comprises an outer layer permeable for electromagnetic radiation transmitted from or to the electromagnetically transmitting and/or receiving device. The outer layer is attached to an outer surface of the base facing away from the accommodating space in the closed state and the outer layer is attached to an outer surface of the cover facing away from the accommodating space in the closed state.

According to such a configuration, the outer layer is provided on the shielding case, which protects the shielding case. Thereby, it can be prevented that the shielding case is damaged and the shielding effect of the Faraday cage can be maintained. The outer layer may be made of a durable fabric.

In a further preferred embodiment, the base and the cover are formed as a box and a lid and each of the base and the cover comprise a metal sheet for shielding electromagnetic radiation transmitted from or to the electromagnetic transmitting and/or receiving device.

According to such a configuration, a particularly sturdy and durable shielding case can be provided. The metal sheet of the base and the cover may entirely surround the electromagnetic transmitting and/or receiving device so as to form the Faraday cage. Preferably, there are no holes in the metal sheet. The cover may be formed as a lid that is attached to the base by a hinge for opening and closing the box by a rotation of the cover around the hinge.

In a further preferred embodiment, the metal sheet includes silver, copper, aluminium, or steel for shielding of electromagnetic radiation transmitted from or to the electromagnetic transmitting and/or receiving device. Alternatively, a carbon sheet may be employed.

According to such a configuration, particularly effective shielding of electromagnetic radiation for a box can be provided.

In a further preferred embodiment, the electromagnetic shielding device further comprises a connector attached to the portion of the shielding case. The connector is connected to the antenna cable and provides an outside connection for connecting the external antenna from the outside of the shielding case.

According to such a configuration, the electromagnetic shielding device may be quickly and conveniently connected and disconnected from the external antenna. This allows to use the electromagnetic shielding device in a functional mode, i.e. when the antenna cable is connected to the external antenna, and in a shielding mode, i.e. when the antenna cable is disconnected from the external antenna. On the other hand, the external antenna does not have to be moved, but can be fixedly installed in its position. Specifically, the connector may comprise a metal plate integrated in a hole provided in the shielding case so as to seal the hole.

In a further preferred embodiment, the electromagnetic shielding device further comprises the external antenna arranged outside the shielding case and connected to the antenna cable, for transmitting and/or receiving electromagnetic radiation.

According to such a configuration, the external antenna can be arranged outside the shielding case in a spot where desired wireless networks have a clear signal. The transmission and/or reception of electromagnetic radiation transmitted from and/or to the electromagnetic transmitting and/or receiving device can be performed by the external antenna. The external antenna may be calculated and tested to operate in the required frequency range which is connected to the antenna cable for this frequency range and with a length the antenna cable.

In a further preferred embodiment, the external antenna includes a cable having a length of 3 meters or more.

According to such a configuration, the external antenna may be placed far away from the electromagnetic transmitting and/or receiving device. The level of electromagnetic radiation decreases with increasing distance following the inverse square law, i.e. the level decreases by the square of the difference of the distance. For example, a distance 10 times greater reduces the radiation level by 100 times or by 99%. Thereby, it is possible to further reduce exposure of the user to electromagnetic radiation transmitted from the electromagnetic transmitting and/or receiving device. Particularly, the cable of the antenna cable may have a length of 5 meters or more, 10 meters or more, up to 20 meters.

### Brief description of drawings

The aspects of the invention may be best understood from the following detailed description taken in conjunction with the accompanying figures. The figures are schematic and simplified for clarity, and they just show details to improve the understanding of the claims, while other details are left out. The individual features of each aspect may each be combined with any or all features of the other aspects. These and other aspects, features and/or technical effect will be apparent from and elucidated with reference to the illustrations described hereinafter, in which:
Fig. 1 is a perspective view of an electromagnetic shielding device according to a first embodiment of the invention;
Fig. 2 is a plan view of the electromagnetic shielding device according to the first embodiment of the invention;
Fig. 3 is a side view of the electromagnetic shielding device according to the first embodiment of the invention;
Fig. 4 is a schematic plan view of an electromagnetic shielding device according to the first embodiment of the invention;
Fig. 5 is a schematic plan view of an electromagnetic shielding device according to a second embodiment of the invention;
Fig. 6A is a perspective view of an electromagnetic shielding device according to a third embodiment of the invention; and
Fig. 6B is a perspective view of an electromagnetic shielding device according to a fourth embodiment of the invention.

### Detailed description

The detailed description set forth below in connection with the appended drawings is intended as a description of various configurations. The detailed description includes specific details for the purpose of providing a thorough understanding of various concepts. However, it will be apparent to those skilled in the art that these concepts may be practised without these specific details.

### (First embodiment)

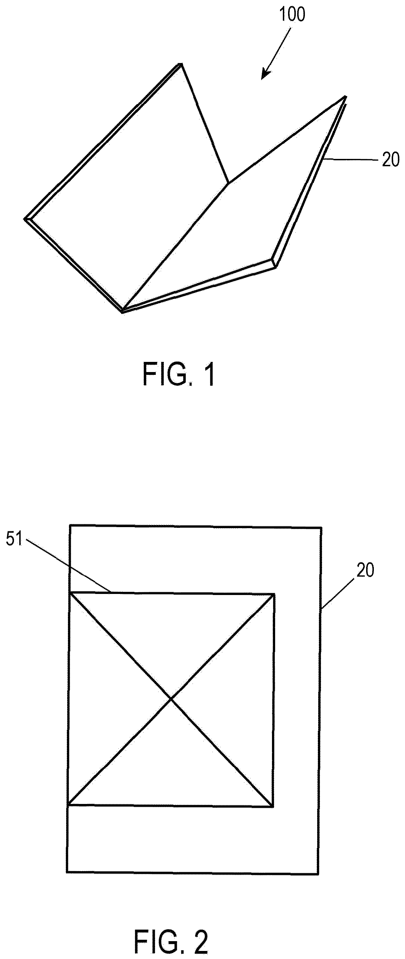

Fig. 1 is a perspective view of an electromagnetic shielding device according to a first embodiment. The electromagnetic shielding device 100 comprises a shielding case 20. The shielding case 20 comprises a base 22 (right-side portion of the shielding case 20 in Fig. 1) and a cover 23 (left-side portion of the shielding case 20 in Fig. 1).

In the first embodiment, the base 22 and the cover 23 of the shielding case 20 are integrally made from one piece of a multi-layer fabric. As shown in Fig. 1, the one piece of the multi-layer fabric can be folded along a centerline so as to form the base 22 on one side of the centerline (right-side portion of the shielding case 20 in Fig. 1) and to form the cover 23 on the other side of the centerline (left-side portion of the shielding case 20 in Fig. 1). A portion located at the centerline between the base 22 and the cover 23 may also be called a folding region. The shielding case 20 of the first embodiment may also be referred to as an envelope.

The base 22 has a substantially rectangular shape. The base 22 is configured to be placed on a flat surface of another element, such as that of a table. Thereby, the base 22 comes into contact with the flat surface of the other element. As shown in Fig. 2, the base 22 has an accommodating area 51 for accommodating the electromagnetic transmitting and/or receiving device thereon. The accommodating area 51 of the base 22 is a surface that is suitable for holding the electromagnetic transmitting and/or receiving device thereon.

The accommodating area 51 is smaller than a size of the rectangular-shaped base 22, as shown in Fig. 2. In the first embodiment, the accommodating area 51 is spaced apart from an outer circumference of the base 22 at three edges of the rectangular-shaped base 22 by 20 to 80 millimeters when viewed in a plan view of the accommodating area 51. The fourth edge of the rectangular-shaped base 22 corresponds to the position where the one piece multi-layer fabric is folded (centerline of the one piece multi-layer fabric; folding region). In the first embodiment, the fourth edge of the rectangular-shaped base 22 coincides with a part of the accommodating area 51, as shown in Fig. 2.

The cover 23 has a substantially rectangular shape. The cover 23 is configured to cover the electromagnetic transmitting and/or receiving device. The cover 23 can be folded along the centerline (folding region) of the one piece of the multi-layer fabric so as to be placed on the base 22. Thereby, the cover 23 comes in contact with the base 22 so as to surround the accommodating area 51 along an entire circumference of the accommodating area 51.

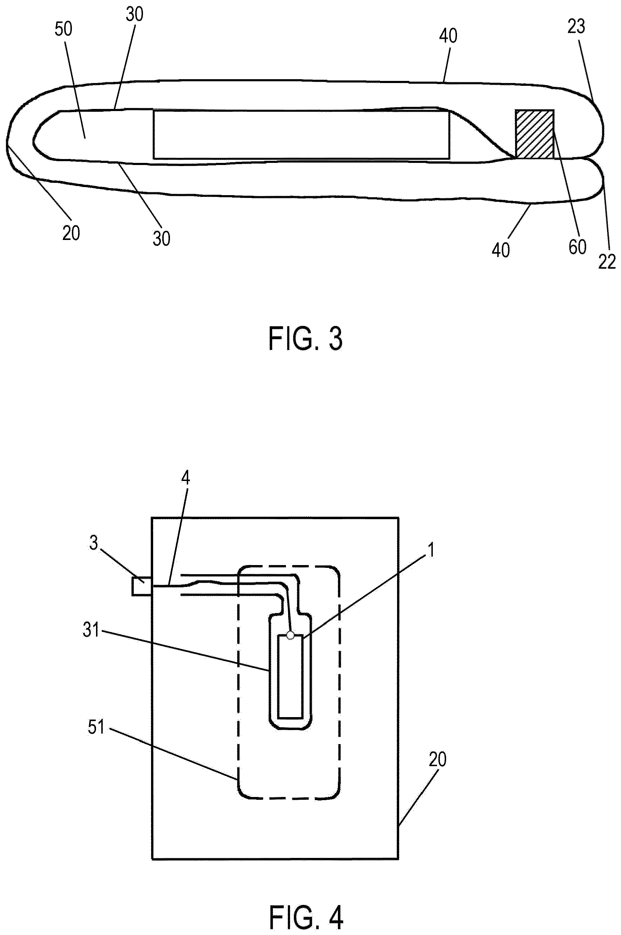

As shown in Fig. 3, a weight member 60 is incorporated in the cover 23 at least at a part of the circumference of the cover 23. The weight member 60 provides gravitational force for pressing the cover 23 towards the base 22 at least at a part of the circumference of the cover 23. The weight member 60 is suitable for providing sufficient gravitational force so as to deform the stiff metal fibers included in the cover 23 in order to place the outer circumference of the cover 23 on the outer circumference of the base 22. The base 22 does not have a weight member 60 incorporated at a part of the circumference of the base 22.

When the cover 23 is folded towards the base 22 along the centerline (folding region) of the one piece of the multi-layer fabric, as shown in Fig. 3, an accommodating space 50 is formed between the base 22 and the cover 23. The electromagnetic transmitting and/or receiving device can be accommodated in the accommodating space 50. The accommodating area 51 is located entirely inside the accommodating space 50. The position of the cover 23 being placed on the base 22, as shown in Fig. 3, is also called a closed state.

The multi-layer fabric of the base 22 and the cover 23 is made of one or more layers of fabric and each one of the layers of fabric includes metal fibers for shielding electromagnetic radiation transmitted from or to the electromagnetic transmitting and/or receiving device. In the first embodiment, the multi-layer fabric is made of two layers of fabric and each of the layers comprises silver fibers.

On an inner surface of the multi-layer fabric, which faces the accommodating space 50 in the closed state, an inner layer is provided. The inner layer is permeable for electromagnetic radiation transmitted from or to the electromagnetically transmitting and/or receiving device. The inner layer is made from a woven fabric. The inner layer is attached to the inner surface of the one piece multi-layer fabric (i.e. the base 22 and the cover 23) facing the accommodating space 50 in the closed state.

On an outer surface of the multi-layer fabric, which faces away from the accommodating space 50 in the closed state, an outer layer is provided. The outer layer is permeable for electromagnetic radiation transmitted from or to the electromagnetically transmitting and/or receiving device. The outer layer is made from a woven fabric. The outer layer is attached to the outer surface of the one piece multi-layer fabric (i.e. the base 22 and the cover 23) facing away from the accommodating space 50 in the closed state.

Fig. 4 is a schematic plan view of an electromagnetic shielding device 100 according to the first embodiment. As shown in Fig. 4, the electromagnetic shielding device 100 further comprises an internal antenna 1, which is arranged inside the accommodating space 50 of the shielding case 20. The internal antenna 1 is constructed in a manner as to induce electromagnetic radiation transmitted from or to the electromagnetic transmitting and/or receiving device.

In the first embodiment, the internal antenna 1 is placed in a center of the accommodating area 51, as shown in Fig. 4. Specifically, the internal antenna 1 is placed inside an antenna pocket 31 that is sewn onto the inner layer of the base 22.

In addition, as shown in Fig. 4, the electromagnetic shielding device 100 comprises a connector 3. The connector 3 provides an outside connection for connecting an external antenna from the outside of the shielding case 20. Specifically, as shown in Fig. 4, the connector 3 is provided in the folding region of the one piece multi-layer fabric, which includes the centerline of the one piece multi-layer fabric. The connector 3 further comprises a metal plate (sealing plate) that is integrated in a hole provided in the multi-layer fabric of the shielding case 20 so as to seal the hole. In other words, the metal plate of the connector 3 is integrated in the shielding case 20 so as to provide a shielded interface between the accommodating space 50 and the outside of the shielding case 20.

The electromagnetic shielding device 100 further comprises an antenna cable 4. The antenna cable 4 is a coaxial cable. One end of the antenna cable 4 is connected to the internal antenna 1 and the other end of the antenna cable 4 is connected to the connector 3, as shown in Fig. 4. The antenna cable 4 provides an electrical connection between the internal antenna 1 and the connector 3.

An external antenna (not shown) is arranged outside the shielding case 20 and connected to the connector 3 of the electromagnetic shielding device 100. The external antenna has a cable that has a length between 3 and 20 meters. The external antenna is arranged in a spot where desired wireless networks have a clear signal.

### (Second embodiment)

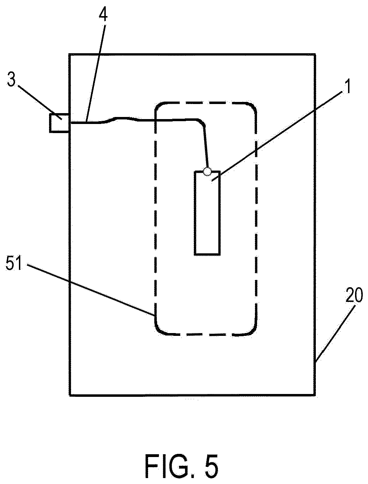

Fig. 5 is a schematic plan view of an electromagnetic shielding device 100 according to a second embodiment. The electromagnetic shielding device 100 according to the second embodiment is equal to the electromagnetic shielding device 100 according to the first embodiment, except that the internal antenna 1 is not placed in the antenna pocket 31.

As shown in Fig. 5, according to the second embodiment the internal antenna 1 is placed in the center of the base 22 of the shielding case 20 when viewed in a plan view. The internal antenna 1 is arranged between the base 22 and the inner layer attached to the base 22.

### (Third embodiment)

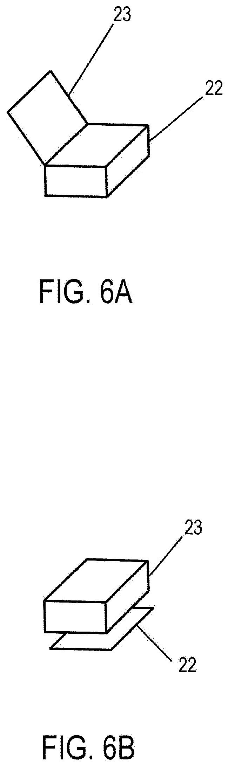

Fig. 6A is a perspective view of an electromagnetic shielding device 100 according to a third embodiment. The electromagnetic shielding device 100 according to the third embodiment is equal to the electromagnetic shielding device 100 according to the first embodiment, except that the shielding case 20 is not made from fabric, but the shielding case 20 is formed as a box.

As shown in Fig. 6A, the base 22 and the cover 23 are formed as a box and a lid and each of the base 22 and the cover 23 comprise a metal sheet for shielding electromagnetic radiation transmitted from or to the electromagnetic transmitting and/or receiving device. According to the third embodiment, the metal sheet of the base 22 and the cover 23 is formed to entirely surround the electromagnetic transmitting and/or receiving device so as to form the Faraday cage.

Specifically, the base 22 is formed as a box and the accommodating area 51 is provided on an inside surface of a bottom of the box. The cover 23 is plate-shape and formed as a lid. The cover 23 is attached to the base 22 by a hinge such that the shielding case 20 can be opened and closed by a rotation of the cover 23 around the hinge.

### (Fourth embodiment)

Fig. 6B is a perspective view of an electromagnetic shielding device 100 according to a fourth embodiment. The electromagnetic shielding device 100 according to the fourth embodiment is equal to the electromagnetic shielding device 100 according to the first embodiment, except that the shielding case 20 is not made from fabric, but the shielding case 20 is formed as a box, similar to the electromagnetic shielding device 100 according to the third embodiment.

As shown in Fig. 6B, the base 22 and the cover 23 are formed as a box and a lid and each of the base 22 and the cover 23 comprise a metal sheet for shielding electromagnetic radiation transmitted from or to the electromagnetic transmitting and/or receiving device. According to the fourth embodiment, the metal sheet of the base 22 and the cover 23 is formed to entirely surround the electromagnetic transmitting and/or receiving device so as to form the Faraday cage.

Specifically, the base 22 is formed as a plate and provides the accommodating area 51. The cover 23 is formed as a box that is placeable on the base 22 in a detachably attachable manner. The accommodating space 50 is provided between the base 22 and the cover 23.

The particular features, structures or characteristics described in the embodiment do not all have to be present in one electromagnetic shielding device, and a particular feature may be omitted. The previous description is provided to enable any person skilled in the art to practice the various aspects described herein. Various modifications to the embodiment will be readily apparent to those skilled in the art, and the generic principles defined herein may be applied to other aspects.

## Claims

1. An electromagnetic shielding device (100), comprising:
a shielding case (20) having an accommodating space (50) for accommodating an electromagnetic transmitting and/or receiving device, and configured to shield electromagnetic radiation transmitted from or to the electromagnetically transmitting and/or receiving device between the accommodating space (50) and an outside of the shielding case (20);
an internal antenna (1) placed in the accommodating space (50), for transmitting electromagnetic radiation from or to the electromagnetically transmitting and/or receiving device accommodated in the accommodating space (50); and
an antenna cable (4) connected to the internal antenna (1), and guided to a portion of the shielding case (20) so as to be connectable to an external antenna arranged outside the shielding case (20), wherein
the shielding case (20) includes
a base (22) having an accommodating area (51) for accommodating the electromagnetic transmitting and/or receiving device thereon and
a cover (23) for covering the electromagnetic transmitting and/or receiving device, wherein
the cover (23) is placeable on the base (22) such that the cover (23) and the base (22) surround the accommodating space (50) in a closed state, wherein the electromagnetic shielding device (100) further comprises
an inner layer (30) permeable for electromagnetic radiation transmitted from or to the electromagnetically transmitting and/or receiving device, wherein
the inner layer (30) is attached to an inner surface of the base (22) facing the accommodating space (50) in the closed state, and the internal antenna (1) is placed between the inner layer (30) and the base (22) or
the inner layer (30) is attached to an inner surface of the cover (23) facing the accommodating space (50) in the closed state, and the internal antenna (1) is placed between the inner layer (30) and the cover (23), **characterized in that**
the inner layer (30) comprises at least one antenna pocket (31) opened to the accommodating space (50) for receiving the internal antenna (1).

2. The electromagnetic shielding device (100) according to claim 1, wherein the internal antenna (1) overlaps with the accommodating area (51) when viewed in a plan view of the accommodating area (51).

3. The electromagnetic shielding device (100) according to claim 1 or 2, wherein the internal antenna (1) overlaps with a center of the accommodating area (51) when viewed in a plan view of the accommodating area (51).

4. The electromagnetic shielding device (100) according to any one of claims 1 to 3, wherein the internal antenna (1) overlaps within a perimeter of the electromagnetic transmitting and/or receiving device.

5. The electromagnetic shielding device (100) according to any one of claims 1 to 4, wherein the accommodating area (51) is spaced apart from an outer circumference of the base (22) by at least 20 millimeters when viewed in a plan view of the accommodating area (51).

6. The electromagnetic shielding device (100) according to any one of claims 1 to 5, wherein the internal antenna (1) is attached to the base (22) or the cover (23) of the shielding case (20).

7. The electromagnetic shielding device (100) according to any one of claims 1 to 6, wherein the at least one antenna pocket (31) faces the accommodating area (51).

8. The electromagnetic shielding device (100) according to any one of claims 1 to 7, wherein
each of the base (22) and the cover (23) is made of one or more layers of fabric and
each one of the layers of fabric includes metal fibers and/or carbon fibers for shielding electromagnetic radiation transmitted from or to the electromagnetic transmitting and/or receiving device.

9. The electromagnetic shielding device (100) according to claim 8, wherein the metal fibers include silver, copper, aluminium, or steel for shielding of electromagnetic radiation.

10. The electromagnetic shielding device (100) according to any one of claims 1 to 9, further comprising
an outer layer (40) permeable for electromagnetic radiation transmitted from or to the electromagnetically transmitting and/or receiving device, wherein
the outer layer (40) is attached to an outer surface of the base (22) facing away from the accommodating space (50) in the closed state and
the outer layer (40) is attached to an outer surface of the cover (23) facing away from the accommodating space (50) in the closed state.

11. The electromagnetic shielding device (100) according to any one of claims 1 to 7, wherein
the base (22) and the cover (23) are formed as a box and a lid and
each of the base (22) and the cover (23) comprise a metal sheet and/or a carbon sheet for shielding electromagnetic radiation transmitted from or to the electromagnetic transmitting and/or receiving device.

12. The electromagnetic shielding device (100) according to claim 11, wherein
the metal sheet includes silver, copper, aluminium, or steel for shielding of electromagnetic radiation transmitted from or to the electromagnetic transmitting and/or receiving device.

13. The electromagnetic shielding device (100) according to any one of claims 1 to 12, further comprising
a connector (3) attached to the portion of the shielding case (20), wherein
the connector (3) is connected to the antenna cable (4) and provides an outside connection for connecting the external antenna from the outside of the shielding case (20).

14. The electromagnetic shielding device (100) according to any one of claims 1 to 13, further comprising the external antenna arranged outside the shielding case (20) and connected to the antenna cable (4), for transmitting and/or receiving electromagnetic radiation.

15. The electromagnetic shielding device (100) according to claim 14, wherein the external antenna includes a cable having a length of 3 meters or more.

## Patentansprüche

1. Elektromagnetikabschirmvorrichtung (100) mit:
einem Abschirmgehäuse (20), das einen Aufnahmeraum (50) zum Aufnehmen einer elektromagnetischen Sende- und/oder Empfangsvorrichtung hat und konfiguriert ist, um elektromagnetische Strahlung abzuschirmen, die von oder zu der elektromagnetischen Sende- und/oder Empfangsvorrichtung zwischen dem Aufnahmeraum (50) und einer Außenseite des Abschirmgehäuses (20) übertragen wird;
einer Innenantenne (1), die in dem Aufnahmeraum (50) platziert ist, zum Übertragen von elektromagnetischer Strahlung von oder zu der elektromagnetischen Sende- und/oder Empfangsvorrichtung, die in dem Aufnahmeraum (50) aufgenommen ist; und
einem Antennenkabel (4), das mit der Innenantenne (1) verbunden ist und zu einem Abschnitt des Abschirmgehäuses (20) geführt ist, um mit einer Außenantenne verbindbar zu sein, die außerhalb des Abschirmgehäuses (20) angeordnet ist, wobei
das Abschirmgehäuse (20)
eine Basis (22), die einen Aufnahmebereich (51) zum Aufnehmen der elektromagnetischen Sende- und/oder Empfangsvorrichtung darauf hat, und
eine Abdeckung (23) zum Abdecken der elektromagnetischen Sende- und/oder Empfangsvorrichtung aufweist, wobei
die Abdeckung (23) auf der Basis (22) so platzierbar ist, dass die Abdeckung (23) und die Basis (22) in einem geschlossenen Zustand den Aufnahmeraum (50) umgeben, wobei die Elektromagnetikabschirmvorrichtung (100) ferner
eine Innenlage (30) aufweist, die für elektromagnetische Strahlung durchlässig ist, die von oder zu der elektromagnetischen Sende- und/oder Empfangsvorrichtung übertragen wird, wobei
die Innenlage (30) an einer Innenfläche der Basis (22) angebracht ist, die in dem geschlossenen Zustand dem Aufnahmeraum (50) zugewandt ist, und die Innenantenne (1) zwischen der Innenlage (30) und der Basis (22) platziert ist, oder
die Innenlage (30) an einer Innenfläche der Abdeckung (23) angebracht ist, die in dem geschlossenen Zustand dem Aufnahmeraum (50) zugewandt ist, und die Innenantenne (1) zwischen der Innenlage (30) und der Abdeckung (23) platziert ist, **dadurch gekennzeichnet, dass**
die Innenlage (30) mindestens eine Antennentasche (31) aufweist, die zu dem Aufnahmeraum (50) geöffnet ist, zum Aufnehmen der Innenantenne (1).

2. Elektromagnetikabschirmvorrichtung (100) nach Anspruch 1, wobei die Innenantenne (1) bei Betrachtung in einer Draufsicht des Aufnahmebereichs (51) den Aufnahmebereich (51) überlappt.

3. Elektromagnetikabschirmvorrichtung (100) nach Anspruch 1 oder 2, wobei die Innenantenne (1) bei Betrachtung in einer Draufsicht des Aufnahmebereichs (51) eine Mitte des Aufnahmebereichs (51) überlappt.

4. Elektromagnetikabschirmvorrichtung (100) nach einem der Ansprüche 1 bis 3, wobei die Innenantenne (1) innerhalb eines Umfangs der elektromagnetischen Sende- und/oder Empfangsvorrichtung überlappt.

5. Elektromagnetikabschirmvorrichtung (100) nach einem der Ansprüche 1 bis 4, wobei der Aufnahmebereich (51) bei Betrachtung in einer Draufsicht des Aufnahmebereichs (51) von einem Außenumfang der Basis (22) um mindestens 20 Millimeter beabstandet ist.

6. Elektromagnetikabschirmvorrichtung (100) nach einem der Ansprüche 1 bis 5, wobei die Innenantenne (1) an der Basis (22) oder der Abdeckung (23) des Abschirmgehäuses (20) befestigt ist.

7. Elektromagnetikabschirmvorrichtung (100) nach einem der Ansprüche 1 bis 6, wobei die mindestens eine Antennentasche (31) dem Aufnahmebereich (51) zugewandt ist.

8. Elektromagnetikabschirmvorrichtung (100) nach einem der Ansprüche 1 bis 7, wobei
die Basis (22) und die Abdeckung (23) jeweils aus einer oder mehreren Gewebelagen hergestellt sind und
jede der Gewebelagen Metallfasern und/oder Kohlenstofffasern zum Abschirmen von elektromagnetischer Strahlung aufweist, die von oder zu der elektromagnetischen Sende- und/oder Empfangsvorrichtung übertragen wird.

9. Elektromagnetikabschirmvorrichtung (100) nach Anspruch 8, wobei die Metallfasern Silber, Kupfer, Aluminium oder Stahl zum Abschirmen von elektromagnetischer Strahlung aufweisen.

10. Elektromagnetikabschirmvorrichtung (100) nach einem der Ansprüche 1 bis 9, ferner mit
einer Außenlage (40), die für elektromagnetische Strahlung durchlässig ist, die von oder zu der elektromagnetischen Sende- und/oder Empfangsvorrichtung übertragen wird, wobei
die Außenlage (40) an einer Außenfläche der Basis (22) angebracht ist, die in dem geschlossenen Zustand von dem Aufnahmeraum (50) abgewandt ist, und
die Außenlage (40) an einer Außenfläche der Abdeckung (23) angebracht ist, die in dem geschlossenen Zustand von dem Aufnahmeraum (50) abgewandt ist.

11. Elektromagnetikabschirmvorrichtung (100) nach einem der Ansprüche 1 bis 7, wobei
die Basis (22) und die Abdeckung (23) als ein Kasten und ein Deckel ausgebildet sind und
die Basis (22) und die Abdeckung (23) jeweils ein Metallblech und/oder ein Kohlenstoffblech zum Abschirmen von elektromagnetischer Strahlung aufweisen, die von oder zu der elektromagnetischen Sende- und/oder Empfangsvorrichtung übertragen wird.

12. Elektromagnetikabschirmvorrichtung (100) nach Anspruch 11, wobei
das Metallblech Silber, Kupfer, Aluminium oder Stahl zum Abschirmen von elektromagnetischer Strahlung aufweist, die von oder zu der elektromagnetischen Sende- und/oder Empfangsvorrichtung übertragen wird.

13. Elektromagnetikabschirmvorrichtung (100) nach einem der Ansprüche 1 bis 12, ferner mit
einem Anschluss (3), der an dem Abschnitt des Abschirmgehäuses (20) angebracht ist, wobei
der Anschluss (3) mit dem Antennenkabel (4) verbunden ist und eine Außenverbindung zum Verbinden der Außenantenne von der Außenseite des Abschirmgehäuses (20) bereitstellt.

14. Elektromagnetikabschirmvorrichtung (100) nach einem der Ansprüche 1 bis 13, ferner mit der Außenantenne, die außerhalb des Abschirmgehäuses (20) angeordnet ist und mit dem Antennenkabel (4) verbunden ist, zum Senden und/oder Empfangen von elektromagnetischer Strahlung.

15. Elektromagnetikabschirmvorrichtung (100) nach Anspruch 14, wobei die Außenantenne ein Kabel aufweist, das eine Länge von 3 Metern oder mehr hat.

## Revendications

1. Dispositif de blindage électromagnétique (100), comprenant :
un boîtier de blindage (20) comportant un espace de réception (50) pour recevoir un dispositif d'émission et/ou de réception électromagnétique, et configuré pour protéger un rayonnement électromagnétique transmis depuis ou vers le dispositif d'émission et/ou de réception électromagnétique entre l'espace de réception (50) et un extérieur du boîtier de blindage (20) ;
une antenne interne (1) placée dans l'espace de réception (50), pour transmettre un rayonnement électromagnétique depuis ou vers le dispositif d'émission et/ou de réception électromagnétique reçu dans l'espace de réception (50) ; et
un câble d'antenne (4) connecté à l'antenne interne (1) et guidé vers une partie du boîtier de blindage (20) de manière à pouvoir être connecté à une antenne externe disposée à l'extérieur du boîtier de blindage (20), dans lequel
le boîtier de blindage (20) comprend
une base (22) comportant une zone de réception (51) pour recevoir le dispositif d'émission et/ou de réception électromagnétique sur celle-ci et
une couverture (23) pour couvrir le dispositif d'émission et/ou de réception électromagnétique, dans lequel
la couverture (23) peut être placée sur la base (22) de sorte que la couverture (23) et la base (22) entourent l'espace de réception (50) à l'état fermé, le dispositif de blindage électromagnétique (100) comprenant en outre
une couche intérieure (30) perméable au rayonnement électromagnétique transmis depuis ou vers le dispositif d'émission et/ou de réception électromagnétique, dans laquelle
la couche intérieure (30) est attachée à une surface intérieure de la base (22) faisant face à l'espace de réception (50) à l'état fermé, et l'antenne interne (1) est placée entre la couche intérieure (30) et la base (22) ou
la couche intérieure (30) est attachée à une surface intérieure de la couverture (23) faisant face à l'espace de réception (50) à l'état fermé, et l'antenne interne (1) est placée entre la couche intérieure (30) et la couverture (23), **caractérisée en ce que**
la couche intérieure (30) comprend au moins une poche d'antenne (31) ouverte sur l'espace de réception (50) pour recevoir l'antenne interne (1).

2. Dispositif de blindage électromagnétique (100) selon la revendication 1, dans lequel l'antenne interne (1) chevauche la zone de réception (51) dans une vue en plan de la zone de réception (51).

3. Dispositif de blindage électromagnétique (100) selon la revendication 1 ou 2, dans lequel l'antenne interne (1) chevauche un centre de la zone de réception (51) dans une vue en plan de la zone de réception (51).

4. Dispositif de blindage électromagnétique (100) selon l'une des revendications 1 à 3, dans lequel l'antenne interne (1) chevauche dans un périmètre du dispositif d'émission et/ou de réception électromagnétique.

5. Dispositif de blindage électromagnétique (100) selon l'une des revendications 1 à 4, dans lequel la zone de réception (51) est espacée d'une circonférence extérieure de la base (22) d'au moins 20 millimètres dans une vue en plan de la zone de réception (51).

6. Dispositif de blindage électromagnétique (100) selon l'une des revendications 1 à 5, dans lequel l'antenne interne (1) est attachée à la base (22) ou à la couverture (23) du boîtier de blindage (20).

7. Dispositif de blindage électromagnétique (100) selon l'une des revendications 1 à 6, dans lequel l'au moins une poche d'antenne (31) fait face à la zone de réception (51).

8. Dispositif de blindage électromagnétique (100) selon l'une des revendications 1 à 7, dans lequel
chacune de la base (22) et de la couverture (23) est constituée d'une ou de plusieurs couches de tissu et
chacune des couches de tissu comprend des fibres métalliques et/ou des fibres de carbone pour le blindage du rayonnement électromagnétique transmis depuis ou vers le dispositif d'émission et/ou de réception électromagnétique.

9. Dispositif de blindage électromagnétique (100) selon la revendication 8, dans lequel les fibres métalliques comprennent de l'argent, du cuivre, de l'aluminium ou de l'acier pour le blindage du rayonnement électromagnétique.

10. Dispositif de blindage électromagnétique (100) selon l'une des revendications 1 à 9, comprenant en outre
une couche extérieure (40) perméable au rayonnement électromagnétique transmis depuis ou vers le dispositif d'émission et/ou de réception électromagnétique, dans laquelle
la couche extérieure (40) est attachée à une surface extérieure de la base (22) orientée à l'opposé de l'espace de réception (50) à l'état fermé et
la couche extérieure (40) est attachée à une surface extérieure de la couverture (23) orientée à l'opposé de l'espace de réception (50) à l'état fermé.

11. Dispositif de blindage électromagnétique (100) selon l'une des revendications 1 à 7, dans lequel
la base (22) et la couverture (23) se présentent sous la forme d'une boîte et d'un couvercle et
la base (22) et la couverture (23) comprennent chacune une feuille de métal et/ou une feuille de carbone pour le blindage du rayonnement électromagnétique transmis depuis ou vers le dispositif d'émission et/ou de réception électromagnétique.

12. Dispositif de blindage électromagnétique (100) selon la revendication 11, dans lequel
la feuille de métal comprend de l'argent, du cuivre, de l'aluminium ou de l'acier pour le blindage du rayonnement électromagnétique transmis depuis ou vers le dispositif d'émission et/ou de réception électromagnétique.

13. Dispositif de blindage électromagnétique (100) selon l'une des revendications 1 à 12, comprenant en outre
un connecteur (3) attaché à la partie du boîtier de blindage (20), dans lequel
le connecteur (3) est connecté au câble d'antenne (4) et fournit une connexion extérieure pour connecter l'antenne externe depuis l'extérieur du boîtier de blindage (20).

14. Dispositif de blindage électromagnétique (100) selon l'une des revendications 1 à 13, comprenant en outre l'antenne externe disposée à l'extérieur du boîtier de blindage (20) et connectée au câble d'antenne (4), pour transmettre et/ou recevoir un rayonnement électromagnétique.

15. Dispositif de blindage électromagnétique (100) selon la revendication 14, dans lequel l'antenne externe comprend un câble d'une longueur de 3 mètres ou plus.
